**Europäisches Patentamt**

**European Patent Office**

**Office européen des brevets**

(19)

(11) Veröffentlichungsnummer: **0 034 193**
**A1**

(12)

# EUROPÄISCHE PATENTANMELDUNG

(21) Anmeldenummer: **80100778.2**

(22) Anmeldetag: **15.02.80**

(51) Int. Cl.³: **B 64 G 1/44**

(43) Veröffentlichungstag der Anmeldung:
**26.08.81 Patentblatt 81/34**

(84) Benannte Vertragsstaaten:
**AT BE CH DE FR GB IT LU NL SE**

(71) Anmelder: **Messerschmitt-Bölkow-Blohm Gesellschaft
mit beschränkter Haftung
Postfach 801109
D-8000 München 80(DE)**

(72) Erfinder: **Kiendl, Helmut
Finsingstrasse 9
D-8000 München 83(DE)**

(54) **Niederhalter für entfaltbare Trägerelemente.**

(57) Bei Raumflugkörpern müssen während der Aufstiegsphase in der Rakete Teile wie Solargeneratoren oder Antennen sicher fixiert werden. Hierzu dient ein Niederhalter, der
mit einem Haltebügel (11) auf ein Druckstück (14) der mit
Niederhaltepunkten in Form von Nasen (17.1 - 17.6)
ausgerüsteten Panel (15.1 - 15.6) aufsetzbar ist. Der Haltebügel (11) ist am oberen Ende eines Schlittens (20) drehbar
gelagert, an dessen unteren Ende ein Einhängebügel (21)
drehbar angebracht ist, wobei der Einhängebügel (21) mit
einer Rolle (34) in einen Kolben (35) einführbar ist, der im mit
dem Raumflugkörper fest verbundenen nach vorne offenen
Gegenlager (22) unter Federspannung (Feder 26) gelagert
ist.Der Schlitten (20) ist druckfederunterstützt (Druckfedern
26,27) auf Führungen (24,25) verschiebbar. Der Haltebügel
(11) ist mittels Feder (32,33) verschwenkbar, und der Kolben
(35) ist im Gegenlager (22) bei gespannter Feder (26) arretierbar.

EP 0 034 193 A1

./...

Fig. 1

Niederhalter für entfaltbare Trägerelemente

Die Erfindung betrifft einen Niederhalter für entfaltbare Trägerelemente insbesondere für Panel von Solargeneratoren von Raumflugkörpern.

Niederhalter werden insbesondere in der Raumfahrt dazu verwendet, Teile, die in der späteren Missionsphase sich vom Raumflugkörper wegerstrecken sollen, während der Aufstiegsphase von der Erde sicher zu fixieren. Zu diesen Teilen zählen vor allen Dingen die Antennen und die Solargeneratoren. Bei den Solargeneratoren handelt es sich um großflächige Gebilde, deren einzelne Tafeln allgemein als Panel bezeichnet werden, wobei die Panel auf einer Seite mit Halbleiterelementen belegt sind. Die Großflächigkeit ist erforderlich, um den nötigen Energiebedarf während der Mission sicherzustellen.

Wegen des geringen Platzangebotes in der Trägerrakete resultiert hieraus die Notwendigkeit, den Solargenerator zunächst zusammenzulegen und erst nach der Trennung des Raumflugkörpers von der Trägerrakete voll zu entfalten; ein Beispiel hierzu ist in der DE-AS 27 51 273 enthalten.

Für diesen Vorgang müssen Niederhalter zwei gegenläufige Forderungen erfüllen. Zum einen müssen die stapelartig gefalteten Solargeneratoren während der Aufstiegsphase der Trägerrakete gegen die enormen Beschleunigungen und Vibrationen gesichert sein, zum anderen dürfen die Niederhalter nicht das Entfalten nach der Aufstiegsphase behindern, da andernfalls bei fehlender Energie-

- 2 -

versorgung oder auch von teilweise entfalteten Antennen die Mission des Raumflugkörpers scheitert.

In der deutschen Anmeldung P 28 53 070 der Anmelderin (noch nicht veröffentlicht) ist ein Niederhaltesystem beschrieben, bei dem ein Bolzen von außen durch Bohrungen in den Solargenerator geführt wird und in einen Riegel einrastet. Auf den Bolzen kann eine Vorspannung aufgebracht werden, so daß der Stapel gut zusammengepreßt wird. Durch das Kappen eines Blockierseiles wird der Riegel freigegeben und infolge der auf den Bolzen aufgebrachten Vorspannung wird dieser nach außen beschleunigt und der Entfaltvorgang kann ablaufen.

Im Einzelfall kann es wünschenswert sein, z.B. um den Entfaltvorgang völlig freizuhalten von störenden Momenten, zunächst die Vorspannung, die den Stapel zusammenhält zu beseitigen, ohne jedoch die Entfaltung gleichzeitig freizugeben. Besonders bei größeren Stapeln kann dies im Interesse einer gleichmäßigen, die Bahn des Raumflugkörpers nicht beeinflussenden Entfaltung erforderlich sein.

Aufgabe der Erfindung ist es, einen Niederhalter zu schaffen, bei dem die Niederhaltekraft vor der Freigabe des Stapels vollständig entspannt wird.

Diese Aufgabe ist gemäß dem Kennzeichen des Anspruchs 1 dadurch gelöst, daß ein Haltebügel auf ein Druckstück[+] mit Niederhaltepunkten in Form von Nasen ausgerüsteten Panel aufsetzbar ist, daß der Haltebügel am oberen Ende eines Schlitten drehbar gelagert ist, an dessen unterem Ende

[+] der

- 3 -

- 3 -

ein Einhängebügel drehbar angebracht ist, wobei der Einhängebügel mit einer Rolle in einen Kolben einführbar
ist, der  im mit dem Raumflugkörper fest verbundenen nach
vorne offenen Gegenlager unter Federspannung gelagert
ist, daß der Schlitten druckfederunterstützt auf Führungen verschiebbar ist, daß der Haltebügel mittels Feder
verschwenkbar ist, und daß der Kolben im Gegenlager bei
gespannter Feder arretierbar ist.

Besonders vorteilhaft ist es, daß eine Konstruktion gefunden wurde, die ohne großen Aufwand an Bauteile die gestellte Aufgabe vollständig löst. Die Nutzlastbilanz eines Raumflugkörperswird durch den neuartigen Niederhalter
gegenüber den bisherigen Lösungen keinesfalls verschlechtert. Sehr nützlich ist auch, daß die bisherige gebräuchliche Technik der Freigabe des Niederhalters mittels Seilen beibehalten werden kann, mithin kostspielige Neuentwicklungen in diesem Bereich vermieden werden. Da die Vorspannkraft vollständig beseitigt wird, ist beim nachfolgenden Entfalten des Stapels ein völliger Gleichlauf möglich, weil keine Störmomente aus der Niederhaltung wirken können. Daraus folgt auch, daß die Entfaltung mit
größter Zuverlässigkeit erfolgen kann. Außerdem kann der
Niederhalter ohne weiteres an beliebige Stapeldicken
angepaßt werden. Die Erfindung ist anhand der Figuren
näher erläutert. Es zeigen:

Fig. 1    einen Niederhalter nach der Erfindung im Halbschnitt in der Gespanntstellung mit sechs Paneln;

Fig. 2    die Seitensicht zu Fig. 1.

- 4 -

- 4 -

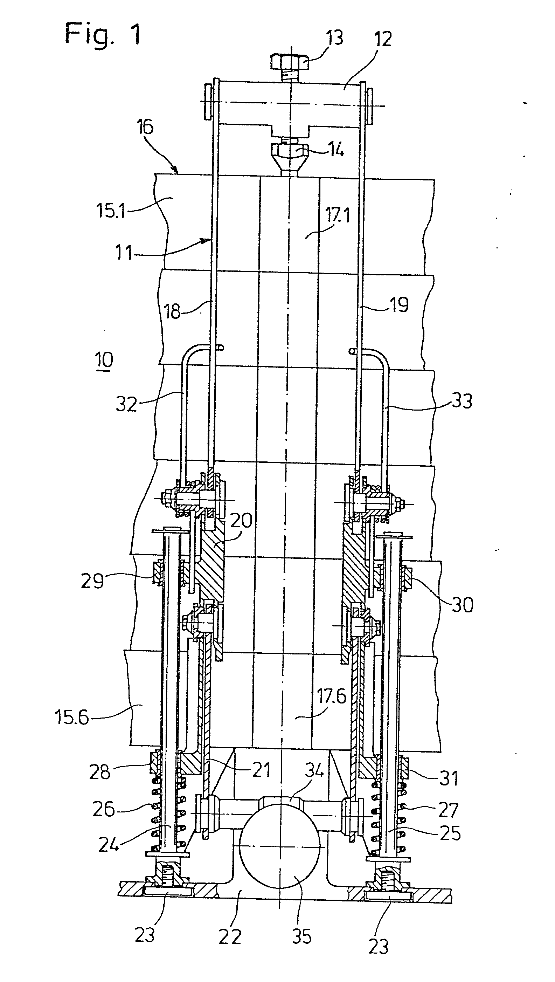

Gemäß Fig. 1 besteht ein Niederhalter 10 aus einem
schwenkbaren Haltebügel 11, der über ein Joch 12 und
eine darin drehbare Spannschraube 13 auf einem Druckstück 14 aufsitzt. Das Druckstück 14 ist Bestandteil
des äußeren Panel 15.1 eines aus insgesamt sechs Paneln
15.1 - 15.6 bestehenden Stapels 16. Der Stapel 16 besteht aus Paneln, die im Bereich der Niederhalterung mit
vorstehenden Nasen 17.1 - 17.6 ausgerüstet sind, so daß
der Haltebügel 11 mit seinem linken und rechten Schenkel
18,19 diese Nasen mittig umfaßt.

Der Haltebügel 11 ist über einen Schlitten 2o und einem
Einhängebügel 21 mit einem Gegenlager 22 mechanisch verbindbar. Das Gegenlager 22 ist mit der Struktur des Raumflugkörpers durch Schrauben 23 fest verbunden. Der Schlitten 2o ist auf Führungen 24,25 verschiebbar gelagert, wobei die Führungen 24,25 ebenfalls mit dem Raumflugkörper
unmittelbar oder aber auch als Teil des Gegenlagers 22
fest verbunden sind. Die Führungen 24,25 - im Beispiel
runde Stäbe - tragen Druckfedern 26,27, welche sich auf
dem Schlitten 2o abstützen. Der Schlitten 2o weist rechts
und links je zwei Lagerstellen 28,29,30,31 auf, z.B. Nasen
mit Teflonbuchsen, mit denen er nach Art von Gleitlagern
auf den Führungen 24,25 gleitet. Gegen ein Herausrutschen
des Schlittens 2o aus den Führungen 24,25, ist an deren
oberen Enden eine einfache Stiftsicherung vorhanden. Sowohl der Haltebügel 11 als auch der Einhängebügel 21 sind
in Schlitten 2o drehbar gelagert, der Haltebügel 11 am oberen Ende und der Einhängebügel sinngemäß am unteren Ende
des Schlittens 2o. Die Lagerung kann eine einfache Stift-
Bohrung-Lagerung sein, wobei Muttern für die seitliche
Befestigung sorgen.

- 5 -

- 5 -

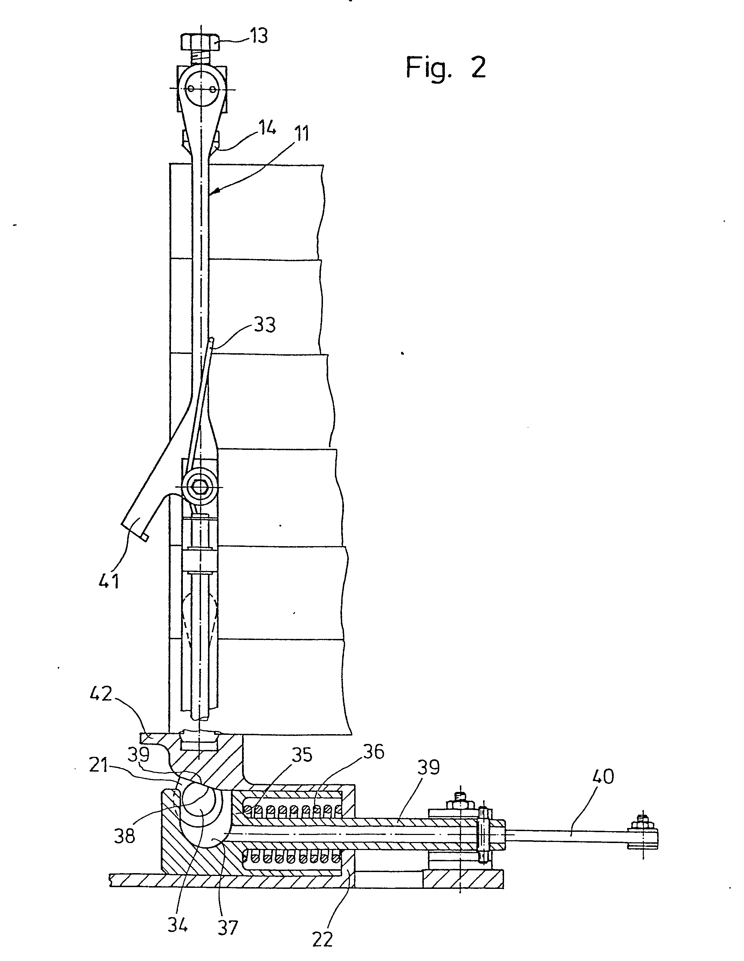

Beim Haltebügel 11 besteht die Besonderheit, daß dieser durch links- bzw.rechtsseitige Schenkelfedern 32,33 von der dargestellten Position nach außen bewegt werden kann (siehe auch Fig.2). Die Schenkelfedern 32,33 finden ihr Widerlager im Schlitten 2o. Ein Anschlag 41 begrenzt die Drehbewegung des Haltebügels 11 (siehe Fig.2).

Der Einhängebügel 21 trägt an seinem unteren Ende eine Rolle 34. Gemäß Fig. 2 ist im Gegenlager 22 ein Kolben 35 unter Vorspannen einer Feder 36 beweglich angeordnet, wobei das Gegenlager 22 nach vorne offen ist. Im Kolben 35 ist in seinem vorderen Bereich eine zylinderförmige Ausbuchtung 37 eingearbeitet, in welche die Rolle 34 des Einhängebügels 21 paßt. Die Rolle 34 weist eine Abschrägung 38 auf, die mit einer gleichen Abschrägung 39 im Gegenlager 22 korrespondiert. Nach hinten ragt eine Stange 39 des Kolbens 35 aus dem Gegenlager 22 heraus. Die Stange 39 ist mit einem Halteseil 4o einer nicht näher dargestellten Freigabevorrichtung für den Niederhalter 1o verbunden.

Im Ausführungsbeispiel liegt der aus den sechs Paneln 15.1 - 15.6 bestehende Stapel auf dem Gegenlager 22 auf; ebensogut kann das Gegenlager aber auch um 180$^\circ$ gedreht angeordnet sein, so daß der Stapel auf der Struktur des Raumflugkörpers aufliegt.

Nach dem Falten des Stapels wird der Haltebügel 11 auf das Druckstück 14 mit seiner Spannschraube 13 aufgesetzt. Der Einhängebügel 21 wird in die Ausbuchtung 37 des Kolbens 35 eingeführt und das Halteseil 4o ange-

- 6 -

- 6 -

spannt. Dadurch wird der Kolben 35 nach innen gezogen und die Feder 36 vorgespannt. Die Rolle 34 gleitet mit ihrer Schräge 38 entlang der Schräge 39 im Gegenlager 22 in dieselbe Richtung. Dabei wird eine Stellung erreicht, bei der sich die Rolle 34 nicht mehr von selbst aus der Ausbuchtung 37 des Kolbens 35 herausbewegen kann. Mit dieser Bewegung ist ein Nachuntenziehen des Schlittens 20 vorhanden, da dieser über den Einhänge-bügel 21 der Bewegung der Rolle 34 folgen muß. Gleichzeitig damit werden die Druckfedern 26,27 gespannt. Die Spannschraube 13 im Joch 12 des Haltebügels 11 gestattet es, eine definierte Vorspannkraft auf den Stapel des Panel 15.1 - 15.6 aufzubringen. Da die Niederhaltepunkte an den Paneln als vorspringende Nasen ausgebildet sind, und die niederhaltenden Teile paarig beidseitig zu den Nasen angeordnet sind, erfolgt die Krafteinleitung asymetrisch ohne Erzeugung von einseitigen Biegekräften.

Die Auslösung des Niederhalters, z.B. nach Erreichen der vorbestimmten Position des Raumflugkörpers erfolgt durch das Kappen des Halteseils 40. Dieser Bereich ist nicht Bestandteil der Erfindung, es sei nur darauf hingewiesen, daß das Kappen z.B. auf Funkbefehl pyrotechnisch erfolgen kann. Statt der hier beschriebenen Fixierung durch das Halteseil 40 kann natürlich ebensogut eine beliebig andere Fixierung des Kolbens 35, etwa durch Sperrklinken erfolgen, ohne daß dadurch der Bereich der Erfindung verlassen wird. Nach der Freigabe des Kolbens 35 wird dieser von der Feder 36 nach vorne bewegt. Diese Bewegung wird unterstützt durch die resultierende Vorspannkraft - eingestellt mit der Spannschraube 13, auf-

- 7 -

- 7 -

grund der Flächenschrägen 38,39. Nach kurzem Weg ist die Rolle 34 freigegeben, so daß sich der Schlitten 2o unter dem Druck der Druckfedern 26,27 nach oben bewegen kann, wobei die Rolle 34 am Ende dieser Bewegung an einer Nase 42 des Gegenlagers 22 anliegt. Die am Boden aufgebrachte Niederhaltekraft hat sich demzufolge vor der Entfaltung des Stapels vollständig entspannt.

Durch die Bewegung des Schlittens 2o hebt sich die Spannschraube 13 vom Druckstück 14 ab, so daß der Haltebügel 11 von den Schenkelfedern 32,33 von dem Stapel weg geschwenkt werden kann. Der Stapel kann nun durch den dafür vorgesehenen Mechanismus entfaltet werden.

Durch Verlängern oder Verkürzen der Schenkel 18,19 des Haltebügels 11 kann der Niederhalter 1o an jede gewünschte Panelanzahl bzw. Stapeldicke angepaßt werden.

MESSERSCHMITT-BÖLKOW-BLOHM
GESELLSCHAFT
MIT BESCHRÄNKTER HAFTUNG
MÜNCHEN

Ottobrunn, 25.01.1980
8650
BT01 Fro/gö

Niederhalter für entfaltbare Trägerelemente

P a t e n t a n s p r ü c h e

1. Niederhalter für entfaltbare Trägerelemente, insbesondere für Panel von Solargeneratoren von Raumflugkörpern, dadurch g e k e n n z e i c h n e t , daß ein
Haltebügel (11) auf ein Druckstück (14) der mit Niederhaltepunkten in Form von Nasen (17.1 - 17.6) ausgerüsteten Panel (15.1 - 15.6) aufsetzbar ist, daß der
Haltebügel (11) am oberen Ende eines Schlitten (2o)
drehbar gelagert ist, an dessen unterem Ende ein Einhängebügel (21) drehbar angebracht ist, wobei der Einhängebügel (21) mit einer Rolle (34) in einen Kolben
(35) einführbar ist, der im mit dem Raumflugkörper fest
verbundenen nach vorne offenen Gegenlager (22) unter
Federspannung (Feder 26) gelagert ist, daß der Schlitten (2o) druckfederunterstützt (Druckfedern 26,27) auf
Führungen (24,25) verschiebbar ist, daß der Haltebügel
(11) mittels Feder (32,33) verschwenkbar ist, und daß
der Kolben (35) im Gegenlager (22) bei gespannter Feder (26) arretierbar ist.

- 2 -

- 2 -

2. Niederhalter nach Anspruch 1, dadurch g e k e n n - z e i c h n e t , daß der Haltebügel (11) mit einer Spannschraube (13) auf das Druckstück (14) aufsetzbar ist, wobei die Spannschraube (13) sich in einem im Haltebügel (11) gelagerten Joch (12) abstützt.

3. Niederhalter nach Anspruch 2, dadurch g e k e n n - z e i c h n e t , daß die Rolle (34) eine Schräge (38) aufweist, welche mit einer Schräge (39) im Gegenlager (22) korrespondiert und die Schrägen (38,39) nach außen ansteigen.

0034193

Fig. 1

Fig. 2

0034193

2/2

Europäisches
Patentamt

**EUROPÄISCHER RECHERCHENBERICHT**

| Kategorie | Kennzeichnung des Dokuments mit Angabe, soweit erforderlich, der maßgeblichen Teile | betrifft Anspruch |
|-----------|---|---|
| A | US - A - 3 326 497 (MICHELSON) | |
| A | US - A - 3 327 967 (SCHRANTZ) | |
| A | US - A - 3 587 999 (SUD.AVIATION) | |
| | & DE - A - 1 756 015 | |
| | -- | |
| A | US - A - 3 981 467 (LUDLOW) | |
| A | US - A - 3 144 775 (CHAIMSON) | |
| | ---- | |

**KLASSIFIKATION DER ANMELDUNG (Int Cl.)**

B 64 G 1/44

**RECHERCHIERTE SACHGEBIETE (Int Cl.)**

B 64 G  1/00
H 01 L 25/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Grunden angeführtes Dokument

&: Mitglied der gleichen Patent-familie, übereinstimmendes Dokument

X  Der vorliegende Recherchenbericht wurde für alle Patentansprüche erstellt.

| Recherchenort | Abschlußdatum der Recherche | Prufer |
|---|---|---|
| Den Haag | 20-10-1980 | HAUGLUSTAINE |

EPA form 1503.1  06.78